# EUROPEAN PATENT APPLICATION

(11) **EP 3 799 392 A1**
(43) Date of publication of application: **31.03.2021**
(21) Application number: 19874771.9
(22) Date of filing: 16.07.2019
(51) Int. Cl.: H04L 29/08, G06F 16/31, G06F 16/13, H04L 9/32, H04L 29/06

(54) **METHOD FOR OBTAINING SERVICE DATA AND CONVERGED CDN SYSTEM**

(30) Priority: 03.06.2019 CN 201910474797
(71) Applicant: Wangsu Science & Technology Co., Ltd., Shanghai 200030 (CN)
(72) Inventor: WANG, Wenting, Shanghai 200030 (CN)
(74) Representative: Vinsome, Rex Martin
(86) International application number: PCT/CN2019/096169
(87) International publication number: WO 2020/244026

(57) **Abstract**

Embodiments of the present application provide a method for acquiring service data and a converged CDN system, and belong to the field of computer technologies. The method is applied to the converged CDN system, and the converged CDN system comprises a plurality of edge nodes distributed by a plurality of CDN vendors and an IPFS cluster. The method comprises: receiving, by a target edge node, a target service request, and detecting whether target service data to which the target service request points is already stored locally (201); if the target service data is not stored, sending, by the target edge node, a data query request of the target service data to an IPFS management apparatus (202); querying, by the IPFS management apparatus, whether the target service data is already stored in the IPFS cluster, and sending a query result to the target edge node (203); and acquiring, by the target edge node, the target service data from the IPFS cluster or a source station of the target service data according to the query result (204).

## Description

### CROSS REFERENCE TO RELATED APPLICATIONS

The present application claims priority of Chinese Patent Application entitled "Method for Acquiring Service Data and Converged CDN System" filed on June 3, 2019, with the Application No. 201910474797.1, the disclosure of which is incorporated herein by reference in its entirety as part of the present application.

### TECHNICAL FIELD

The present application relates to computer technologies, and more particularly, to a method for acquiring service data and a converged CDN system.

### BACKGROUND

A converged CDN technology has a plurality of CDN vendors converged, so that the CDN vendors can have service requests mutually switched to one another. If a certain CDN vendor (which may be referred to as an original CDN vendor) does not deploy any edge node in a certain region, the original CDN vendor may switch all service requests from the region to another CDN vendor (which may be referred to as a proxy CDN vendor) who has deployed edge nodes in the region to process. In this way, the original CDN vendor neither needs to schedule the service requests to edge nodes in other regions, nor needs to add edge nodes deployed in the above-described region.

The original CDN vendor may periodically detect whether the respective edge nodes of the proxy CDN vendor that are used for processing the service requests of the original CDN vendor can provide service normally. If edge nodes of the proxy CDN vendor that are located in a certain geographic position cannot provide service normally, then the original CDN vendor switches back the service requests in the geographic position, and the service requests are still processed by the original CDN vendor. For example, the original CDN vendor may periodically request for a preset file from the proxy CDN vendor through a preset application programming interface (API); when the original CDN vendor cannot acquire the preset file from edge nodes of the proxy CDN vendor that are located in a certain geographic position, it indicates that the edge nodes cannot provide service normally, and the original CDN vendor switches back the service requests in the geographic position, and then the service requests in the geographic position are still processed by the edge nodes of the original CDN vendor.

In a process of implementing the present application, the applicant finds that the existing technology at least has the problem that:

Service data stored in edge nodes of the original CDN vendor may be deleted due to no user access for a long term, so when the original CDN vendor switches back the service requests from a certain geographic position which were delivered to the proxy CDN vendor for processing, it is highly unlikely that a target edge node is stored with the service data corresponding to the respective service requests. If the target edge node is not stored with the service data to which the service requests point, the target edge node requests the service data from a source station of the service data. Since the target edge node needs to process a large number of service requests, the edge nodes get back to the source in a large amount, which increases a load of the source station, and may even cause denial of service by the source station due to an excessive load.

### SUMMARY

An object of the present application is to provide a method for acquiring service data and a converged CDN system, and technical solutions are as follows.

In a first aspect, there is provided a method for acquiring service data, the method is applied to a converged CDN system, the converged CDN system includes edge nodes of a plurality of CDN vendors and an IPFS cluster, the IPFS cluster is constituted by an IPFS management apparatus and an IPFS node configured in each of the edge nodes, and the method includes:
receiving, by a target edge node, a target service request, and detecting whether target service data to which the target service request points is already stored locally;
if the target service data is not stored, sending, by the target edge node, a data query request of the target service data to the IPFS management apparatus;
querying, by the IPFS management apparatus, whether the target service data is already stored in the IPFS cluster, and sending a query result to the target edge node;
acquiring, by the target edge node, the target service data from the IPFS cluster or a source station of the target service data according to the query result.

Optionally, the method further includes:
uploading, by any edge node in the converged CDN system, the service data to the IPFS management apparatus, after acquiring the service data from the source station;
calculating, by the IPFS management apparatus, a data hash value of the service data by using a preset hash algorithm, and storing the service data to an IPFS node corresponding to the data hash value;
generating, by the IPFS management apparatus, a data index according to the data hash value of the service data and node information of the IPFS node corresponding to the data hash value, and storing the data index in a data storage record of the IPFS cluster.

Optionally, the querying, by the IPFS management apparatus, whether the target service data is already stored in the IPFS cluster, and sending a query result to the target edge node, includes:
querying, by the IPFS management apparatus, whether there is a target data hash value of the target service data in the data storage record;
if the target data hash value is found out, sending, by the IPFS management apparatus, a target data index corresponding to the target data hash value to the target edge node, thereby, acquiring, by the target edge node, the target service data from the IPFS node to which the target data index points;
if the target data hash value is not found out, sending, by the IPFS management apparatus, a service response that there is no target service data to the target edge node, thereby, acquiring, by the target edge node, the target service data from the source station of the target service data.

Optionally, the data query request carries a target resource locator of the target service data.

Before the querying, by the IPFS management apparatus, whether there is a target data hash value of the target service data in the data storage record, the method further includes:
acquiring, by the IPFS management apparatus, the target data hash value corresponding to the target resource locator of the target service data from a mapping relationship record of a preset resource locator and the data hash value.

Optionally, the converged CDN system further includes a blockchain cluster, and the blockchain cluster is constituted by a blockchain node configured in each of the edge nodes.

After the calculating, by the IPFS management apparatus, the data hash value of the service data by using the preset hash algorithm, and storing the service data to the IPFS node corresponding to the data hash value, the method further includes:
sending, by each of the IPFS nodes, resource consumption information of a node resource when storing the service data to a local blockchain node;
settling, by the blockchain cluster, a token for each of the CDN vendors according to the resource consumption information received by each of the blockchain nodes.

Optionally, the method further includes:
uploading, by any edge node in the converged CDN system, the service data to the IPFS management apparatus, after acquiring the service data from the source station;
fragmenting, by the IPFS management apparatus, the service data into a plurality of data fragments by using a preset fragmentation algorithm, and calculating a fragment hash value of each of the data fragments and a data hash value of the service data by using a preset hash algorithm;
storing, by the IPFS management apparatus, each of the data fragments to an IPFS node corresponding to a fragment hash value of the data fragment;
generating, by the IPFS management apparatus, a data index according to the data hash value of the service data, all the fragment hash values, and node information of an IPFS node corresponding to each of the fragment hash values, and storing the data index into a data storage record of the IPFS cluster.

Optionally, the storing, by the IPFS management apparatus, each of the data fragments to the IPFS node corresponding to the fragment hash value of the data fragment, includes:
copying, by the IPFS management apparatus, each of the data fragments into a plurality of backups according to a preset redundancy configuration, and respectively storing the plurality of backups of each of the data fragments to a plurality of IPFS nodes corresponding to a fragment hash value of each of the data fragments.

Optionally, if the target data index corresponding to the target data hash value is received, the acquiring, by the target edge node, the target service data from the IPFS node to which the target data index points, includes:
if the target data index corresponding to the target data hash value is received, determining, by the target edge node, a plurality of IPFS nodes corresponding to each of the fragment hash values that are recorded in the target data index;
acquiring, by the target edge node, a data fragment corresponding to the fragment hash value nearby from a plurality of IPFS nodes corresponding to each of the fragment hash values.

Optionally, the converged CDN system further includes a blockchain cluster, and the blockchain cluster is constituted by a blockchain node configured in each of the edge nodes.

After the storing, by the IPFS management apparatus, each of the data fragments to the IPFS node corresponding to the fragment hash value of the data fragment, the method further includes:
sending, by each of the IPFS nodes, resource consumption information of a node resource when storing the data fragment to a local blockchain node;
settling, by the blockchain cluster, a token for each of the CDN vendors according to the resource consumption information received by each of the blockchain nodes.

Optionally, the settling, by the blockchain cluster, the token for each of the CDN vendors according to the resource consumption information sent by each of the IPFS nodes, includes:
periodically calculating, by each of the blockchain nodes, contribution computing power of a local IPFS node by using a preset consensus algorithm, according to resource consumption information received within a current period;
determining, by each of the blockchain nodes, an accounting node of the blockchain cluster, and sending the contribution computing power of the local IPFS node to the accounting node;
settling, by the accounting node, a token for each of the CDN vendors according to contribution computing power uploaded by all the blockchain nodes in the blockchain cluster.

Optionally, the method further includes:
locally configuring, by the edge node, an IPFS node and configuring storage space for the IPFS node, when receiving an IPFS configuration instruction;
locally configuring, by the edge node, a blockchain node, when receiving a blockchain configuration instruction.

In a second aspect, there is provided a converged CDN system, the system includes edge nodes of a plurality of CDN vendors and an IPFS cluster, the IPFS cluster is constituted by an IPFS management apparatus and an IPFS node configured in each of the edge nodes, wherein:
a target edge node is configured to receive a target service request, and detect whether target service data to which the target service request points is already stored locally;
the target edge node is further configured to: if the target service data is not stored, send a data query request of the target service data to the IPFS management apparatus;
the IPFS management apparatus is configured to query whether the target service data is already stored in the IPFS cluster, and send a query result to the target edge node;
the target edge node is further configured to acquire the target service data from the IPFS cluster or a source station of the target service data according to the query result.

Optionally, any edge node in the converged CDN system is further configured to:
upload the service data to the IPFS management apparatus, after acquiring the service data from the source station.

The IPFS management apparatus is further configured to:
calculate a data hash value of the service data by using a preset hash algorithm, and store the service data to an IPFS node corresponding to the data hash value;
generate a data index according to the data hash value of the service data and node information of the IPFS node corresponding to the data hash value, and store the data index in a data storage record of the IPFS cluster.

Optionally, the IPFS management apparatus is specifically configured to:
query whether there is a target data hash value of the target service data in the data storage record;
if the target data hash value is found out, send a target data index corresponding to the target data hash value to the target edge node, thereby, the target edge node acquires the target service data from the IPFS node to which the target data index points;
if the target data hash value is not found out, send a service response that there is no target service data to the target edge node, thereby, the target edge node acquires the target service data from the source station of the target service data.

Optionally, the data query request carries a target resource locator of the target service data.

The IPFS management apparatus is further configured to:
acquire the target data hash value corresponding to the target resource locator of the target service data from a mapping relationship record of a preset resource locator and the data hash value.

Optionally, the converged CDN system further includes a blockchain cluster, and the blockchain cluster is constituted by a blockchain node configured in each of the edge nodes.

Each of the IPFS nodes is further configured to:
send resource consumption information of a node resource when storing the service data to a local blockchain node.

The blockchain cluster is configured to:
settle a token for each of the CDN vendors according to the resource consumption information received by each of the blockchain nodes.

Optionally, any edge node in the converged CDN system is further configured to:
upload the service data to the IPFS management apparatus, after acquiring the service data from the source station.

The IPFS management apparatus is further configured to:
fragment the service data into a plurality of data fragments by using a preset fragmentation algorithm, and calculate a fragment hash value of each of the data fragments and a data hash value of the service data by using a preset hash algorithm;
store each of the data fragments to an IPFS node corresponding to a fragment hash value of the data fragment;
generate a data index according to the data hash value of the service data, all the fragment hash values, and node information of an IPFS node corresponding to each of the fragment hash values, and store the data index into a data storage record of the IPFS cluster.

Optionally, the IPFS management apparatus is specifically configured to:
copy each of the data fragments into a plurality of backups according to a preset redundancy configuration, and respectively store the plurality of backups of each of the data fragments to a plurality of IPFS nodes corresponding to a fragment hash value of each of the data fragments.

Optionally, the target edge node is specifically configured to:
if the target data index corresponding to the target data hash value is received, determine a plurality of IPFS nodes corresponding to each of the fragment hash values that are recorded in the target data index;
acquire a data fragment corresponding to the fragment hash value nearby from a plurality of IPFS nodes corresponding to each of the fragment hash values.

Optionally, the converged CDN system further includes a blockchain cluster, and the blockchain cluster is constituted by a blockchain node configured in each of the edge nodes.

Each of the IPFS nodes is further configured to:
send resource consumption information of a node resource when storing the data fragment to a local blockchain node;

The blockchain cluster is configured to:
settle a token for each of the CDN vendors according to the resource consumption information received by each of the blockchain nodes.

Optionally, each of the blockchain nodes is specifically configured to:
periodically calculate contribution computing power of a local IPFS node by using a preset consensus algorithm, according to resource consumption information received within a current period;
determine an accounting node of the blockchain cluster, and send the contribution computing power of the local IPFS node to the accounting node;

The accounting node is configured to:
settle a token for each of the CDN vendors according to contribution computing power uploaded by all the blockchain nodes in the blockchain cluster.

Optionally, the edge node is further configured to:
locally configure an IPFS node and configure storage space for the IPFS node, when receiving an IPFS configuration instruction;
locally configure a blockchain node, when receiving a blockchain configuration instruction.

In a third aspect, there is provided a server, and the server includes:
at least one processor; and,
a memory communicatively connected with the at least one processor; wherein,
the memory is stored with instructions executable by the at least one processor, the instructions are executed by the at least one processor, to cause the at least one processor to execute process of the target edge node, the IPFS management apparatus or the IPFS node in the method for acquiring the service data according to the first aspect.

In a fourth aspect, there is provided a computer readable storage medium, stored with a computer program, wherein, the computer program, when executed by a processor, implements process of the target edge node, the IPFS management apparatus or the IPFS node in the method for acquiring the service data according to the first aspect.

Advantageous effects brought by the technical solutions provided by the embodiments of the present application are as below.

In the embodiments of the present application, backup of the service data by employing the IPFS cluster may bring advantageous effects below: firstly, the IPFS nodes are configured at the respective edge node in the converged CDN system, so that any edge node of each CDN vendor may store a backup of the service data in an IPFS node of any CDN vendor, and accordingly, any edge node of each CDN vendor may share service data from an IPFS node of any CDN vendor, which reduces the number of times of back-to-source and reduces a load of the source station. Secondly, the blockchain nodes are configured at the respective edge nodes in the converged CDN system, so that a transaction occurring when storing the service data in the IPFS cluster may be automatically audited and difficult to falsify; and tokens are issued in the converged CDN system to encourage the respective CDN vendor to supply node resources to the IPFS cluster, which improves a resource utilization rate of the edge nodes. Thirdly, the IPFS cluster may store the service data in fragments; because of the large number of IPFS nodes in the converged CDN system, data fragments of one item of service data may be stored in a more dispersed manner, and thereafter, the edge node may simultaneously download the respective data fragment of the service data from the plurality of IPFS nodes, which improves efficiency of downloading the service data. Fourthly, the IPFS cluster may further store a plurality of backups of the service data in the IPFS cluster, so that any edge node may download the service data nearby, which reduces network delay.

### BRIEF DESCRIPTION OF THE DRAWINGS

In order to clearly illustrate the technical solution of the embodiments of the present application, the drawings to be used in description of the embodiments will be briefly described in the following; it is obvious that the described drawings are only related to some embodiments of the present application. Based on the drawings, those ordinarily skilled in the art can acquire other drawings, without any inventive work.
Fig. 1 is a structural schematic diagram of a converged CDN system provided by an embodiment of the present application;
Fig. 2 is a flow chart of a method for acquiring service data provided by an embodiment of the present application;
Fig. 3 is a structural schematic diagram of a converged CDN system provided by an embodiment of the present disclosure; and
Fig. 4 is a structural schematic diagram of a server provided by an embodiment of the present application.

### DETAILED DESCRIPTION

In order to make objects, technical details and advantages of the present application more apparent, hereinafter, embodiments of the present application will be further described in details in connection with the drawings.

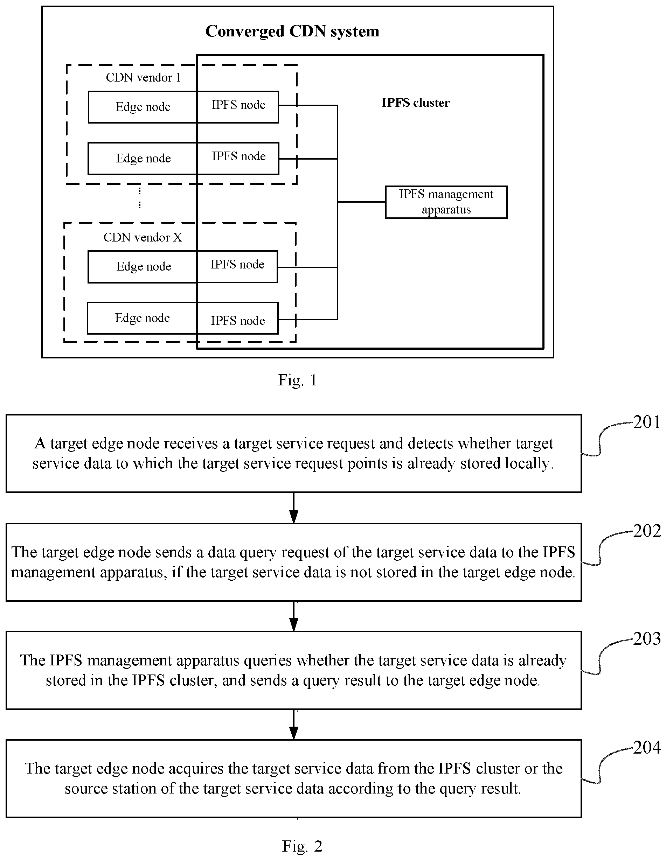

An embodiment of the present application provides a method for acquiring service data, the method is applied to a converged CDN system, and the converged CDN system may include edge nodes of a plurality of CDN vendors and an IPFS cluster. The IPFS cluster may be constituted by an IPFS management apparatus and an IPFS node configured in each of the edge nodes (referring to Fig. 1). The IPFS node may be created by an edge node, it relies on a network apparatus of the edge node and is mainly configured to store the service data. The IPFS management apparatus is mainly configured to manage the service data stored by the respective IPFS node. When the edge node needs to acquire a certain item of service data, the edge node may request for the service data from the IPFS management apparatus in the IPFS cluster, and the IPFS management apparatus may send storage information of the service data to the edge node, so that the edge node may acquire the service data at the IPFS node to which the storage information points. The converged CDN system has the plurality of CDN vendors converged by using a converged CDN technology, so that the edge nodes of the converged CDN system are widely distributed. When the CDN vendors mutually have a service request switched to one another, they may select an edge node closest to the service request to provide service. As compared with a single CDN vendor, the converged CDN system is more flexible in scheduling the service request. Similarly, the IPFS nodes deployed at the edge nodes in the converged CDN system are widely distributed; the IPFS management apparatus may select IPFS nodes of different CDN vendors to store the service data. Any edge node in the converged CDN system can acquire the service data from IPFS nodes of different CDN vendors. As compared with a single CDN vendor, network delay for the edge node in the converged CDN system to acquire the service data from the IPFS cluster is shorter, and data resources stored in the IPFS cluster are more diverse. The edge node and the IPFS management apparatus as described above may both include a processor, a memory and a transceiver. The processor may be configured to execute process of acquiring the service data in a process below, the memory may be configured to store data required and data generated in a process procedure below, and the transceiver may be configured to receive and send relevant data in the process procedure below.

Hereinafter, a process flow shown in Fig. 2 will be described in detail in conjunction with specific embodiment as follows:

Step 201: A target edge node receives a target service request and detects whether target service data to which the target service request points is already stored locally.

During implementation, when a certain CDN vendor joins the converged CDN system to provide service, an IPFS node may be configured at an edge node of the CDN vendor at a same time, so that the edge node of the CDN vendor may perform data interaction with the IPFS cluster. Specifically, a technician of the CDN vendor that joins the converged CDN system may issue an IPFS configuration instruction to the edge node. When receiving the IPFS configuration instruction, the edge node may locally install an IPFS protocol and create an IPFS node, allocate storage space for the IPFS node, and then add the IPFS node to the IPFS cluster. Each IPFS node, when created, may generate a globally unique node identifier (Node ID). It may be understood that, different IPFS nodes have different node identifiers. It is worth mentioning that, the edge node may allocate the storage space to the IPFS node according to a default configuration, or may also allocate the storage space to the IPFS node according to a configuration manually issued by the technician of the CDN vendor.

After receiving a service request sent by a user, a scheduling apparatus of each CDN vendor in the converged CDN system may select a suitable edge node for the service request to provide service, and conditions for selection may include: selecting an edge node that is closer to the user according to an IP address of the service request; querying a current load status of respective edge node, and selecting an edge node that still has a service capability; and so on. After the scheduling apparatus in a certain CDN vendor schedules the target service request sent by the user to a certain edge node (which may be referred to as a target edge node), the target edge node may receive the target service request, and then may detect whether the target service data to which the target service request points is already stored in the target edge node. It may be understood that, if the target service data is stored in the target edge node, the target edge node may directly respond to the target service request and send the target service data to the user; if the target service data is not stored in the target edge node, the target edge node needs to firstly acquire the target service data.

Step 202: the target edge node sends a data query request of the target service data to the IPFS management apparatus, if the target service data is not stored in the target edge node.

During implementation, if the target edge node detects that the target service data is not stored locally, since the target edge node has the IPFS node created thereon, it does not need to directly get back to a central node of the CDN vendor where the target edge node is located or get back to a source station of the target service data (which may be referred to as back-to-source) to acquire the target service data, but only needs to request for the target service data from the IPFS cluster, at which time, the target edge node may send the data query request for the target service data to the IPFS management apparatus in the IPFS cluster, so that the IPFS management apparatus queries whether the target service data is stored in the IPFS cluster. Reasons causing that the target edge node does not store the target service data may include that: the target edge node receives the target service request for a first time; the target service data stored in the target edge node is lost due to a machine fault; the target service data stored in the target edge node is deleted due to no user access for a long-term; and so on.

It is worth mentioning that, an identity authentication mechanism may be preset in the converged CDN system. When a new CDN vendor joins the converged CDN system, the newly joining CDN vendor may acquire a key for identity authentication. It may be understood that, only edge node of a CDN vendor has identity authenticated can perform data interaction with the IPFS cluster in the converged CDN system.

Step 203: the IPFS management apparatus queries whether the target service data is already stored in the IPFS cluster, and sends a query result to the target edge node.

During implementation, after receiving the data query request of the target service data sent by the target edge node, the IPFS management apparatus may query whether the target service data is already stored in the IPFS cluster. Thereafter, the IPFS management apparatus may send the query result to the target edge node, so that the target edge node acquires the target service data according to the query result. It may be understood that, the service data stored in the IPFS cluster is uploaded by the respective edge node in the converged CDN system. If none of the edge nodes in the converged CDN system uploads the target service data to the IPFS cluster, the query result will be null, at which time, the target edge node cannot acquire the target service data from the IPFS cluster.

Optionally, the service data stored in the IPFS cluster may be service data actively uploaded by any edge node in the converged CDN system to the IPFS cluster after getting back to the source to acquire the service data, and accordingly, there may be process below: any edge node in the converged CDN system uploads the service data to the IPFS management apparatus, after acquiring the service data from the source station; the IPFS management apparatus calculates a data hash value of the service data by using a preset hash algorithm, and stores the service data to an IPFS node corresponding to the data hash value; the IPFS management apparatus generates a data index according to the data hash value of the service data and node information of the IPFS node corresponding to the data hash value, and stores the data index in a data storage record of the IPFS cluster.

During implementation, the IPFS cluster is mainly configured to store the service data in the converged CDN system. When the source station pushes a data update notification to the edge node in the converged CDN system through the central node, or the edge node fails to acquire the service data from the IPFS cluster, the edge node may acquire the corresponding service data from the source station, and may simultaneously upload the service data acquired from the source station to the IPFS management apparatus in the IPFS cluster; and the IPFS management apparatus stores the service data uploaded by all the edge nodes in the IPFS cluster. Specifically, after receiving the service data uploaded by the edge node, the IPFS management apparatus may calculate the data hash value of the service data by using a preset hash algorithm (for example, a sha-256 algorithm) according to a specific content of the service data, and then store the service data to the IPFS node corresponding to the data hash value of the service data. Next, the IPFS management apparatus may generate the data index according to the data hash value of the service data and the node information of the IPFS node corresponding to the data hash value, and store the data index into the data storage record of the IPFS cluster. The node information of the IPFS node may include a node identifier of the IPFS node and a network address of the IPFS node, etc.

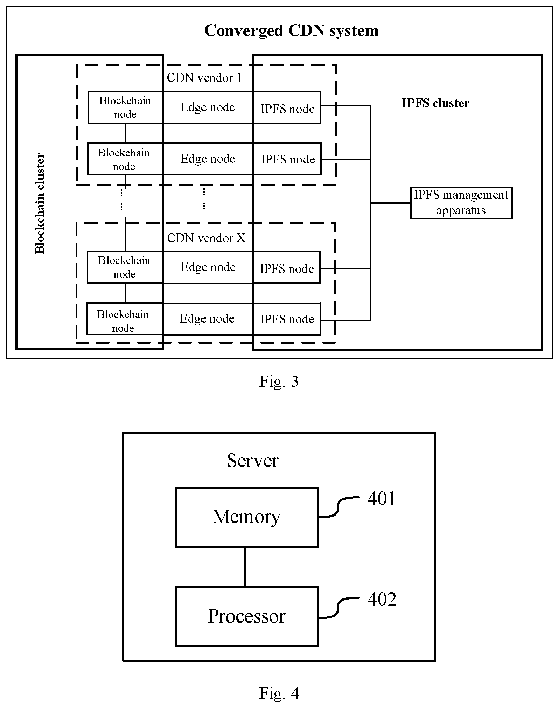

Optionally, in order to encourage the respective CDN vendor in the converged CDN system to contribute storage space to the IPFS cluster and attract more CDN vendors to join the converged CDN system, a token may be issued in the converged CDN system and settled in a form of a blockchain with the respective CDN vendor. Therefore, the converged CDN system may further include a blockchain cluster, and the blockchain cluster is constituted by a blockchain node configured in each edge node (referring to Fig. 3). Accordingly, after the IPFS management apparatus stores the service data to an IPFS node, there may be process below: each IPFS node sends resource consumption information of a node resource when storing the service data to a local blockchain node; and the blockchain cluster settles a token for each CDN vendor according to the resource consumption information received by each blockchain node.

During implementation, the respective CDN vendor in the converged CDN system need to pay a commission when storing the service data in the IPFS cluster; and accordingly, the respective CDN vendor in the converged CDN system may obtain payment when contributing storage space for storing the service data at IPFS nodes. Due to a large number of IPFS nodes in the converged CDN system, it is costly to manually audit a transaction occurring when storing the service data. In order to reduce audit costs and ensure that the transaction cannot be falsified, a blockchain technology may be used in the converged CDN system to automatically record and audit the transaction, and a token may be employed to settle with the respective CDN vendor for the node resources they contribute. Therefore, the converged CDN system may build a blockchain cluster based on the edge nodes of the respective CDN vendors, that is, a network apparatus that relies on the edge nodes, and create a blockchain node at the edge node; wherein, the blockchain cluster is constituted by all the blockchain nodes. When a new edge node joins the converged CDN system, the technician may issue a blockchain configuration instruction to the edge node. When receiving the blockchain configuration instruction, the edge node may locally install a blockchain application to create the blockchain node. In this way, after the IPFS management apparatus stores the service data to the IPFS node, each IPFS node sends, to the blockchain node (which may be referred to as a local blockchain node) configured at the same edge node, the resource consumption information of the node resource when storing the service data (which may include information such as storage space consumed and a bandwidth size for storing the service data) through a preset API, and the local blockchain node registers the resource consumption information sent by the IPFS node. Thereafter, the blockchain cluster may settle a token for each CDN vendor according to resource consumption information received by each blockchain node.

Optionally, the converged CDN system may settle a token according to the amount of node resources contributed by each CDN vendor according to a preset period, and accordingly, there may be process below: each blockchain node periodically calculates contribution computing power of a local IPFS node by using a preset consensus algorithm, according to resource consumption information received within a current period; each blockchain node determines an accounting node of the blockchain cluster, and sends the contribution computing power of the local IPFS node to the accounting node; and the accounting node settles a token for each CDN vendor according to contribution computing power uploaded by all the blockchain nodes in the blockchain cluster.

During implementation, the local blockchain node may calculate computing power contributed by the local IPFS node (which may be referred to as contribution computing power) within a current period periodically (for example, at 10-minute intervals) by using the preset consensus algorithm (for example, Proof Of Work (POW)), according to all resource consumption information sent by the IPFS node received within the current period. Each blockchain node may further determine the accounting node of the blockchain cluster within the current period by using the preset consensus algorithm, and send the contribution computing power of the IPFS node within the current period to the accounting node. Thereafter, the accounting node counts the contribution computing power uploaded by all the blockchain nodes in the blockchain cluster, and settles a token for each CDN vendor. It may be understood that, the edge node may be in one-to-one correspondence with both the IPFS node and the blockchain node configured at the edge node through a node identifier of the IPFS node. When uploading the contribution computing power to the accounting node, the blockchain node should also provide a node identifier respectively corresponding to both parties of each transaction. After completing the token settlement within the current period according to a pre-configured smart contract, the accounting node may generate one account (which may be referred to as a block) according to a token settlement result, and send the account to other blockchain nodes, so that an account recorded in each blockchain node in the blockchain cluster may remain consistent. The smart contract may be jointly formulated by the respective CDN vendor in the converged CDN system and stored in the respective blockchain node in the converged CDN system.

It is worth mentioning that, the token only serves as a mark of the amount of node resources contributed by each edge node in the converged CDN system; the respective CDN vendor in the converged CDN system may exchange tokens into cash according to a certain redemption period. For example, the respective CDN vendor in the converged CDN system views the account every other month to acquire a most recent token settlement result; if a sum of token balance of all edge nodes of a certain CDN vendor is negative, then the CDN vendor needs to purchase tokens with cash so that the sum of the token balance of the respective edge node is no longer negative; and accordingly, when a sum of token balance of all edge nodes of a certain CDN vendor is positive, then the CDN vendor may sell token income acquired in exchange for cash. An exchange rate between token and cash may be changed according to an agreement of the respective CDN vendor in the converged CDN system, and no details will be repeated in the present application.

Further, the IPFS management apparatus may query whether the target service data is already stored in the IPFS cluster according to the target data hash value of the target service data. Accordingly, specific process of step 203 may be as follows: the IPFS management apparatus queries whether there is a target data hash value of the target service data in the data storage record of the IPFS cluster. If the target data hash value is found out, i the IPFS management apparatus sends a target data index corresponding to the target data hash value to the target edge node; if the target data hash value is not found out, the IPFS management apparatus sends a service response that there is no target service data to the target edge node.

During implementation, the data storage record of the IPFS cluster may be stored with a data index of each item of service data stored in the IPFS cluster, and each item of data index may record a data hash value of a corresponding service data and the storage information of the service data stored, and the like. In this way, after receiving the data query request of the target service data sent by the target edge node, the IPFS management apparatus may query whether there is the target data hash value of the target service data in the data storage record of the IPFS cluster; and if the target data hash value is found out, it indicates that the target service data is already stored in the IPFS cluster, then the IPFS management apparatus may send the data index corresponding to the target data hash value (which may be referred to as the target data index) to the target edge node; if the target data hash value is not found out, it indicates that the target service data is not stored in the IPFS cluster, then the IPFS management apparatus sends the service response that there is no target service data to the target edge node. The target data index may be a distributed hash table (DHT), and the DHT may be generated by using any algorithm such as Kademlia, Coral and S/Kademlia, which will not be limited in the present application.

Optionally, the data query request sent by the edge node may carry a target resource locator of the target service data; and accordingly, before the IPFS management apparatus queries whether there is a target data hash value, there may be process below: the IPFS management apparatus acquires the target data hash value corresponding to the target service data from a mapping relationship record of a preset resource locator and the data hash value.

During implementation, the IPFS cluster queries the service data mainly based on the data hash value, and the edge node queries the service data mainly based on the resource locator, so the IPFS cluster may be pre-stored with the mapping relationship record of the resource locator and the data hash value. In this way, when the IPFS management apparatus in the IPFS cluster receives the data query request of the target resource locator that carries the target service data, the IPFS management apparatus may access the mapping relationship record of the resource locator and the data hash value through a pre-configured application programming interface (API), and look up a mapping relationship between the target resource locator and the target data hash value from the mapping relationship record, to further acquire the target data hash value of the target service data. For example, the target resource locator may be a uniform resource locator (URL); the pre-configured API may be a Restful (representational state transfer) API; the IPFS management apparatus accesses the mapping relationship record of the resource locator and the data hash value by calling the Restful API; the IPFS management apparatus may input the URL of the target service data into the RESTful API; and if there is a mapping relationship between the URL of the target service data and the target data hash value in the mapping relationship record, the RESTful API feeds back the target data hash value to the IPFS management apparatus. It may be understood that, if there is not a mapping relationship between the URL of the target service data and the target data hash value in the mapping relationship record, then the RESTful API sends to the IPFS management apparatus response data which is null.

Step 204: the target edge node acquires the target service data from the IPFS cluster or the source station of the target service data according to the query result.

During implementation, the query result sent by the IPFS management apparatus to the target edge node includes two cases below: the target service data is already stored in the IPFS cluster or the target service data is not stored in the IPFS cluster. It may be understood that, if the target service data is already stored in the IPFS cluster, then the target edge node may acquire the target service data from the IPFS cluster; if the target service data is not stored in the IPFS cluster, then the target edge node may acquire the target service data from the source station of the target service data.

Optionally, based on the above-described process that the IPFS management apparatus queries the target data hash value, and feeds back the query result to the target edge node, specific process of step 204 may be as follows: if the target data index corresponding to the target data hash value is received, the target edge node acquires the target service data from the IPFS node where the target data index points; if the service response that there is no target service data is received, the target edge node acquires the target service data from the source station of the target service data.

During implementation, if the query result of the data query request with respect to the target service data received by the target edge node is the target data index, it indicates that the target service data is already stored in the IPFS cluster, then the target edge node may acquire the target service data from the IPFS node to which the storage information points, according to the storage information of the target service data recorded in the target data index. If the query result of the data query request with respect to the target service data received by the target edge node is the service response that there is no target service data, it indicates that target service data is not stored in the IPFS cluster, then the target edge node may acquire the target service data from the source station of the target service data.

Optionally, in order to improve storage and download efficiency of the service data in the IPFS cluster, the IPFS management apparatus may fragment complete service data into a plurality of data fragments, and store the same in a plurality of IPFS nodes in a dispersed manner; and accordingly, the process of storing, by the IPFS cluster, the service data may be as follows: any edge node in the converged CDN system uploads the service data to the IPFS management apparatus, after acquiring the service data from the source station; the IPFS management apparatus fragments the service data into a plurality of data fragments by using a preset fragmentation algorithm, and calculates a fragment hash value of each data fragment and a data hash value of the service data by using a preset hash algorithm; the IPFS management apparatus stores each data fragment to an IPFS node corresponding to a fragment hash value of the data fragment; the IPFS management apparatus generates a data index according to the data hash value of the service data, all the fragment hash values, and node information of an IPFS node corresponding to each fragment hash value, and stores the data index into the data storage record of the IPFS cluster.

During implementation, any edge node in the converged CDN system actively uploads the service data to the IPFS management apparatus in the IPFS cluster after getting back to the source to acquire the service data. After receiving the service data uploaded by the edge node, the IPFS management apparatus may fragment larger service data into a plurality of data fragments by using the preset fragmentation algorithm for storage. For example, the IPFS management apparatus fragments the service data by using a sha-256 algorithm, to fragment the service data into data fragments with each of which has a size of 256 KB, and calculates a fragment hash value of each data fragment according to a content of each data fragment by using the sha-256 algorithm. Thereafter, the IPFS management apparatus may store each data fragment of the service data to an IPFS node corresponding to its fragment hash value. Moreover, the IPFS management apparatus may generate a data index according to the data hash value of the service data, all the fragment hash values, and node information of an IPFS node corresponding to each fragment hash value. In this way, the edge node may simultaneously download different data fragments from a plurality of IPFS nodes, and assemble them into complete service data locally, which improves download efficiency of the service data. It may be understood that, a data fragment having a size smaller than 256 KB may also be stored separately as one block; and hash values of different data fragments may correspond to a same IPFS node.

It is worth mentioning that, in the present application, the service data may also be fragmented by the edge node by using the preset fragmentation algorithm. The edge node uploads the data fragment after fragmentation to the IPFS management apparatus; and the IPFS management apparatus calculates a fragment hash value of the respective data fragment by using the preset hash algorithm, and stores the respective data fragment to an IPFS node corresponding to its fragment hash value. In the present application, the edge node may also be employed to fragment the service data by using the preset fragmentation algorithm, and calculate a fragment hash value of the data fragment after fragmentation by using the preset hash algorithm, and thereafter, the edge node uploads all fragment hash values of the service data to the IPFS management apparatus. The IPFS management apparatus sends node information of an IPFS node corresponding to the fragment hash value to the edge node. Afterwards, the edge node stores the respective data fragment to the corresponding IPFS node.

Optionally, the service data may be stored in fragments; and accordingly, the process after the IPFS management apparatus stores each data fragment to an IPFS node corresponding to a fragment hash value of the data fragment may be as follows: each IPFS node sends resource consumption information of a node resource when storing the data fragment to a local blockchain node; and the blockchain cluster settles a token for each CDN vendor according to the resource consumption information received by each blockchain node.

During implementation, since a complete item of service data may be fragmented into a plurality of data fragments and stored in a plurality of IPFS nodes in a dispersed manner, it is costly to manually audit transactions occurring when storing all the data fragments of all the service data. In order to reduce audit costs and ensure that the transaction cannot be falsified, a blockchain technology may be used in the converged CDN system to automatically record and audit the transactions, and a token may be employed to settle with the respective CDN vendor for the node resources they contribute. Specifically, after the IPFS management apparatus stores the data fragments to the IPFS node, each IPFS node sends the resource consumption information of the node resources when storing the data fragments to the local blockchain node, and the local blockchain node registers the resource consumption information sent by the IPFS node. Thereafter, the blockchain cluster may settle a token for each CDN vendor according to resource consumption information received by each blockchain node.

Optionally, the same as the process of token settlement when the IPFS node stores the complete service data, in a case where the respective IPFS nodes store the data fragments of the service data, the converged CDN system may also settle a token according to the amount of node resources contributed by each CDN vendor according to a preset period. A specific implementation principle and a technical effect to be achieved have been discussed above, and no details will be repeated here in the present application.

Optionally, when a plurality of edge nodes get back to the source station to acquire same service data, the plurality of edge nodes may send the service data to the IPFS management apparatus. In order to avoid wasting storage resources, the IPFS management apparatus may discard repeated service data. Accordingly, the process that the IPFS management apparatus stores each data fragment to an IPFS node corresponding to a fragment hash value of the data fragment may be as follows: the IPFS management apparatus queries whether there is a data hash value of the target service data in the data storage record; if no, the IPFS management apparatus stores each data fragment of the service data to the IPFS node corresponding to the fragment hash value of the data fragment.

During implementation, when a plurality of edge nodes all acquire same service data from the source station of the same service data, the plurality of edge nodes all upload the service data to the IPFS management apparatus, at which time, storage resources of the IPFS cluster will be wasted to a certain extent if the plurality of edge nodes repeatedly upload the same service data. Therefore, when receiving the service data uploaded by the edge node, the IPFS management apparatus may query whether there is already the data hash value of the service data in the data storage record of the IPFS cluster. If yes, it indicates that other edge node has uploaded and successfully stored the service data in the IPFS cluster, then the IPFS management apparatus may discard the service data having the same data hash value. If no, it indicates that the service data is not stored in the IPFS cluster, then the IPFS management apparatus may store each data fragment of the service data to the IPFS node corresponding to its fragment hash value.

It is worth mentioning that, the IPFS management apparatus may also preset an upload queue, temporarily store service data sent by each edge node to the upload queue, record a data hash value of each item of service data in the upload queue, and then store each item of service data sequentially in an arrangement order of the service data in the upload queue. It can be understood that, when receiving the service data, the IPFS management apparatus may query whether there is the data hash value of the service data in the upload queue. If yes, it indicates that other edge node has uploaded the service data to the IPFS management apparatus and the IPFS management apparatus is storing the service data, at which time, the IPFS management apparatus may discard the post-uploaded service data. If no, the IPFS management apparatus may further query whether there is already the data hash value of the service data in the data storage record of the IPFS cluster, if there is already the data hash value of the service data in the data storage record, the IPFS management apparatus may store the service data in the IPFS node.

Optionally, the IPFS management apparatus may store the service data in the IPFS cluster as a plurality of backups, and the process that the IPFS management apparatus stores each data fragment to an IPFS node corresponding to a fragment hash value of the data fragment may be as follows: the IPFS management apparatus copies each data fragment into a plurality of backups according to a preset redundancy configuration, and respectively stores the plurality of backups of each data fragment to a plurality of IPFS nodes corresponding to a fragment hash value of each data fragment.

During implementation, in order to prevent the service data stored in the IPFS cluster from being lost due to shutdown or a machine fault, etc. of the IPFS node, after fragmenting the service data, the IPFS management apparatus may copy each data fragment of the service data according to a redundancy configuration preset by the IPFS cluster (which may be referred to as the preset redundancy configuration), and respectively store the plurality of backups of each data fragment to different IPFS nodes distributed in different geographic positions. The technician of the converged CDN system may adjust the preset redundancy configuration according to actual needs of the service data, which is not limited in the present application. For example, within a certain period, when a certain item of service data has a large amount of access, the technician of the converged CDN system may adjust the preset redundancy configuration, so that each data fragment of the service data may have more backups stored in the IPFS cluster. It may be understood that, when each data fragment of the service data has a plurality of backups stored in the IPFS cluster, a fragment hash value of each data fragment will correspond to a plurality of IPFS nodes, at which time, each fragment hash value recorded in the data index of the service data corresponds to node information of the plurality of IPFS nodes.

Optionally, when the data fragment of the service data has a plurality of backups stored in the IPFS cluster, the target edge node may select one backup for downloading from the plurality of backups, and accordingly, the process that the target edge node acquires the target service data from the IPFS node to which the target data index points may be as follows: if the target data index corresponding to the target data hash value is received, the target edge node determines a plurality of IPFS nodes corresponding to each fragment hash value recorded in the target data index; and the target edge node acquires a data fragment corresponding to the fragment hash value nearby from a plurality of IPFS nodes corresponding to each fragment hash value.

During implementation, all data fragments of the target service data have a plurality of backups stored in the IPFS cluster, and the IPFS management apparatus records the storage information of the target service data in the target data index. Therefore, when receiving the target data query request sent by the target edge node, the IPFS management apparatus may send the target data index to the target edge node. The target data index records node information of all IPFS nodes corresponding to the fragment hash value of each data fragment of the target service data. After determining all the IPFS nodes corresponding to each fragment hash value, the target edge node may select an IPFS node whose geographic position is closest to the target edge node from all the IPFS nodes corresponding to each fragment hash value, and download a data fragment corresponding to each fragment hash value nearby, which can reduce network delay.

It is worth mentioning that, the scheduling apparatuses of the respective CDN vendor in the converged CDN system may monitor a health status of the respective edge nodes of the respective CDN vendors, so as to timely schedule a service request of a faulty edge node to other edge node. When uploading service data to the IPFS cluster, the edge node may encrypt the service data and send a key to the service data to a specified edge node, and thus, with respect to the encrypted service data, only the edge node having the key to the service data may download the service data from the IPFS cluster.

In the embodiment of the present application, backup of the service data by employing the IPFS cluster may bring advantageous effects below: firstly, the IPFS nodes are configured at the respective edge node in the converged CDN system, so that any edge node of each CDN vendor may store a backup of the service data in an IPFS node of any CDN vendor, and accordingly, any edge node of each CDN vendor may share service data from an IPFS node of any CDN vendor, which reduces the number of times of back-to-source and reduces a load of the source station. Secondly, the blockchain nodes are configured at the respective edge node in the converged CDN system, so that a transaction occurring when storing the service data in the IPFS cluster may be automatically audited and difficult to falsify; and tokens are issued in the converged CDN system to encourage the respective CDN vendor to supply node resources to the IPFS cluster, which improves a resource utilization rate of the edge nodes. Thirdly, the IPFS cluster may store the service data in fragments; because of the large number of IPFS nodes in the converged CDN system, data fragments of one item of service data may be stored in a more dispersed manner, and thereafter, the edge node may simultaneously download the respective data fragment of the service data from the plurality of IPFS nodes, which improves efficiency of downloading the service data. Fourthly, the IPFS cluster may further store a plurality of backups of the service data in the IPFS cluster, so that any edge node may download the service data nearby, which reduces network delay.

Based on a same technical concept, an embodiment of the present application further provides a converged CDN system, the system includes edge nodes of a plurality of CDN vendors and an IPFS cluster, the IPFS cluster is constituted by an IPFS management apparatus and an IPFS node configured in each of the edge nodes, wherein:
a target edge node is configured to receive a target service request, and detect whether target service data to which the target service request points is already stored locally;
the target edge node is further configured to: if the target service data is not stored, send a data query request of the target service data to the IPFS management apparatus;
the IPFS management apparatus is configured to query whether the target service data is already stored in the IPFS cluster, and send a query result to the target edge node;
the target edge node is further configured to acquire the target service data from the IPFS cluster or a source station of the target service data according to the query result.

Optionally, any edge node in the converged CDN system is further configured to:
upload the service data to the IPFS management apparatus, after acquiring the service data from the source station;

The IPFS management apparatus is further configured to:
calculate a data hash value of the service data by using a preset hash algorithm, and store the service data to an IPFS node corresponding to the data hash value;
generate a data index according to the data hash value of the service data and node information of the IPFS node corresponding to the data hash value, and store the data index in a data storage record of the IPFS cluster.

Optionally, the IPFS management apparatus is specifically configured to:
Query whether there is a target data hash value of the target service data in the data storage record;
If the target data hash value is found out, send a target data index corresponding to the target data hash value to the target edge node, thereby, the target edge node acquires the target service data from the IPFS node to which the target data index points;
If the target data hash value is not found out, send a service response that there is not the target service data to the target edge node, thereby, the target edge node acquires the target service data from the source station of the target service data.

Optionally, the data query request carries a target resource locator of the target service data.

The IPFS management apparatus is further configured to:
Acquire the target data hash value corresponding to the target resource locator of the target service data from a mapping relationship record of a preset resource locator and the data hash value.

Optionally, the converged CDN system further includes a blockchain cluster, and the blockchain cluster is constituted by a blockchain node configured in each of the edge nodes.

Each of the IPFS nodes is further configured to:
send resource consumption information of a node resource when storing the service data to a local blockchain node;

The blockchain cluster is configured to:
settle a token for each of the CDN vendors according to the resource consumption information received by each of the blockchain nodes.

Optionally, any edge node in the converged CDN system is further configured to:
upload the service data to the IPFS management apparatus, after acquiring the service data from the source station.

The IPFS management apparatus is further configured to:
fragment the service data into a plurality of data fragments by using a preset fragmentation algorithm, and calculate a fragment hash value of each of the data fragments and a data hash value of the service data by using a preset hash algorithm;
store each of the data fragments to an IPFS node corresponding to a fragment hash value of the data fragment;
generate a data index according to the data hash value of the service data, all the fragment hash values, and node information of an IPFS node corresponding to each of the fragment hash values, and store the data index into a data storage record of the IPFS cluster.

Optionally, the IPFS management apparatus is specifically configured to:
copy each of the data fragments into a plurality of backups according to a preset redundancy configuration, and respectively store the plurality of backups of each of the data fragments to a plurality of IPFS nodes corresponding to a fragment hash value of each of the data fragments.

Optionally, the target edge node is specifically configured to:
if the target data index corresponding to the target data hash value is received, determine a plurality of IPFS nodes corresponding to each of the fragment hash values that are recorded in the target data index;
acquire a data fragment corresponding to the fragment hash value nearby from a plurality of IPFS nodes corresponding to each of the fragment hash values.

Optionally, the converged CDN system further includes a blockchain cluster, and the blockchain cluster is constituted by a blockchain node configured in each of the edge nodes.

Each of the IPFS nodes is further configured to:
send resource consumption information of a node resource when storing the data fragment to a local blockchain node;

The blockchain cluster is configured to:
settle a token for each of the CDN vendors according to the resource consumption information received by each of the blockchain nodes.

Optionally, each of the blockchain nodes is specifically configured to:
periodically calculate contribution computing power of a local IPFS node by using a preset consensus algorithm, according to resource consumption information received within a current period;
determine an accounting node of the blockchain cluster, and send the contribution computing power of the local IPFS node to the accounting node;

The accounting node is configured to:
settle a token for each of the CDN vendors according to contribution computing power uploaded by all the blockchain nodes in the blockchain cluster.

Optionally, the edge node is further configured to:
locally configure an IPFS node and configure storage space for the IPFS node, when receiving an IPFS configuration instruction; and
locally configure a blockchain node, when receiving a blockchain configuration instruction.

In the embodiment of the present application, backup of the service data by employing the IPFS cluster may bring advantageous effects below: firstly, the IPFS nodes are configured on the respective edge node in the converged CDN system, so that any edge node of each CDN vendor may store a backup of the service data in an IPFS node of any CDN vendor, and accordingly, any edge node of each CDN vendor may share service data from an IPFS node of any CDN vendor, which reduces the number of times of back-to-source and reduces a load of the source station. Secondly, the blockchain nodes are configured on the respective edge node in the converged CDN system, so that a transaction occurring when storing the service data in the IPFS cluster may be automatically audited and difficult to falsify; and tokens are issued in the converged CDN system to encourage the respective CDN vendors to supply node resources to the IPFS cluster, which improves a resource utilization rate of the edge nodes. Thirdly, the IPFS cluster may store the service data in fragments; because of the large number of IPFS nodes in the converged CDN system, data fragments of one item of service data may be stored in a more dispersed manner, and thereafter, the edge node may simultaneously download the respective data fragment of the service data from the plurality of IPFS nodes, which improves efficiency of downloading the service data. Fourthly, the IPFS cluster may further store a plurality of backups of the service data in the IPFS cluster, so that any edge node may download the service data nearby, which reduces network delay.

An embodiment of the present application further provides a server, as shown in Fig. 4, including:
a memory 301, configured to store program instructions;
a processor 302, configured to call the program instructions stored in the memory, and execute, according to a program acquired, process of the target edge node, the IPFS management apparatus or the IPFS node in the method for acquiring the service data according to the foregoing embodiments.

An embodiment of the present application further provides a computer storage medium, wherein, the computer storage medium is stored with computer executable instructions, and the computer executable instructions are configured to cause a computer to execute the method steps executed by the server according to the foregoing embodiments.

Those skilled in the art may understand that implementation of all or part of the steps of the above-described embodiments may be completed by hardware, or may also be completed by related hardware as instructed by a program; the program may be stored in a computer readable storage medium; and the above-mentioned storage medium may be a read only memory, a magnetic disk or an optical disk, and the like.

The foregoing embodiments merely are preferred embodiments of the present application, and not intended to limit the present application. Any modification, equivalent substitution, improvement, and the like, made within the spirit and principles of the present application should be covered within the protection scope of the present application.

## Claims

1. A method for acquiring service data, wherein, the method is applied to a converged CDN system, the converged CDN system comprises edge nodes of a plurality of CDN vendors and an IPFS cluster, the IPFS cluster is constituted by an IPFS management apparatus and an IPFS node configured in each of the edge nodes, and the method comprises:
receiving, by a target edge node, a target service request, and detecting whether target service data to which the target service request points is already stored locally;
if the target service data is not stored, sending, by the target edge node, a data query request of the target service data to the IPFS management apparatus;
querying, by the IPFS management apparatus, whether the target service data is already stored in the IPFS cluster, and sending a query result to the target edge node;
acquiring, by the target edge node, the target service data from the IPFS cluster or a source station of the target service data according to the query result.

2. The method according to claim 1, wherein, the method further comprises:
uploading, by any edge node in the converged CDN system, the service data to the IPFS management apparatus, after acquiring the service data from the source station;
calculating, by the IPFS management apparatus, a data hash value of the service data by using a preset hash algorithm, and storing the service data to an IPFS node corresponding to the data hash value;
generating, by the IPFS management apparatus, a data index according to the data hash value of the service data and node information of the IPFS node corresponding to the data hash value, and storing the data index in a data storage record of the IPFS cluster.

3. The method according to claim 2, wherein, the querying, by the IPFS management apparatus, whether the target service data is already stored in the IPFS cluster, and sending the query result to the target edge node, comprises:
querying, by the IPFS management apparatus, whether there is a target data hash value of the target service data in the data storage record;
if the target data hash value is found out, sending, by the IPFS management apparatus, a target data index corresponding to the target data hash value to the target edge node, thereby, acquiring, by the target edge node, the target service data from the IPFS node to which the target data index points;
if the target data hash value is not found out, sending, by the IPFS management apparatus, a service response that there is no target service data to the target edge node, thereby, acquiring, by the target edge node, the target service data from the source station of the target service data.

4. The method according to claim 3, wherein, the data query request carries a target resource locator of the target service data;
before the querying, by the IPFS management apparatus, whether there is the target data hash value of the target service data in the data storage record, the method further comprises:
acquiring, by the IPFS management apparatus, the target data hash value corresponding to the target resource locator of the target service data from a mapping relationship record of a preset resource locator and the data hash value.

5. The method according to claim 2, wherein, the converged CDN system further comprises a blockchain cluster, and the blockchain cluster is constituted by a blockchain node configured in each of the edge nodes;
after the calculating, by the IPFS management apparatus, the data hash value of the service data by using the preset hash algorithm, and storing the service data to the IPFS node corresponding to the data hash value, the method further comprises:
sending, by each of the IPFS nodes, resource consumption information of a node resource when storing the service data to a local blockchain node;
settling, by the blockchain cluster, a token for each of the CDN vendors according to the resource consumption information received by each of the blockchain nodes.

6. The method according to claim 1, wherein, the method further comprises:
uploading, by any edge node in the converged CDN system, the service data to the IPFS management apparatus, after acquiring the service data from the source station;
fragmenting, by the IPFS management apparatus, the service data into a plurality of data fragments by using a preset fragmentation algorithm, and calculating a fragment hash value of each of the data fragments and a data hash value of the service data by using a preset hash algorithm;
storing, by the IPFS management apparatus, each of the data fragments to an IPFS node corresponding to a fragment hash value of the data fragment;
generating, by the IPFS management apparatus, a data index according to the data hash value of the service data, all the fragment hash values, and node information of an IPFS node corresponding to each of the fragment hash values, and storing the data index into a data storage record of the IPFS cluster.

7. The method according to claim 6, wherein, the storing, by the IPFS management apparatus, each of the data fragments to the IPFS node corresponding to the fragment hash value of the data fragment, comprises:
copying, by the IPFS management apparatus, each of the data fragments into a plurality of backups according to a preset redundancy configuration, and respectively storing the plurality of backups of each of the data fragments to a plurality of IPFS nodes corresponding to a fragment hash value of each of the data fragments.

8. The method according to claim 7, wherein, if the target data index corresponding to the target data hash value is received, the acquiring, by the target edge node, the target service data from the IPFS node to which the target data index points, comprises:
if the target data index corresponding to the target data hash value is received, determining, by the target edge node, a plurality of IPFS nodes corresponding to each of the fragment hash values that are recorded in the target data index;
acquiring, by the target edge node, a data fragment corresponding to the fragment hash value nearby from a plurality of IPFS nodes corresponding to each of the fragment hash values.

9. The method according to claim 6, wherein, the converged CDN system further comprises a blockchain cluster, and the blockchain cluster is constituted by a blockchain node configured in each of the edge nodes;
after the storing, by the IPFS management apparatus, each of the data fragments to the IPFS node corresponding to the fragment hash value of the data fragment, the method further comprises:
sending, by each of the IPFS nodes, resource consumption information of a node resource when storing the data fragment to a local blockchain node;
settling, by the blockchain cluster, a token for each of the CDN vendors according to the resource consumption information received by each of the blockchain nodes.

10. The method according to claim 5 or 9, wherein, the settling, by the blockchain cluster, the token for each of the CDN vendors according to the resource consumption information sent by each of the IPFS nodes, comprises:
periodically calculating, by each of the blockchain nodes, contribution computing power of a local IPFS node by using a preset consensus algorithm, according to resource consumption information received within a current period;
determining, by each of the blockchain nodes, an accounting node of the blockchain cluster, and sending the contribution computing power of the local IPFS node to the accounting node;
settling, by the accounting node, a token for each of the CDN vendors according to contribution computing power uploaded by all the blockchain nodes in the blockchain cluster.

11. The method according to claim 5 or 9, wherein, the method further comprises:
locally configuring, by the edge node, an IPFS node and configuring storage space for the IPFS node, when receiving an IPFS configuration instruction;
locally configuring, by the edge node, a blockchain node, when receiving a blockchain configuration instruction.

12. A converged CDN system, wherein, the system comprises edge nodes of a plurality of CDN vendors and an IPFS cluster, the IPFS cluster is constituted by an IPFS management apparatus and an IPFS node configured in each of the edge nodes,
a target edge node is configured to receive a target service request, and detect whether target service data to which the target service request points is already stored locally;
the target edge node is further configured to: if the target service data is not stored, send a data query request of the target service data to the IPFS management apparatus;
the IPFS management apparatus is configured to query whether the target service data is already stored in the IPFS cluster, and send a query result to the target edge node;
the target edge node is further configured to acquire the target service data from the IPFS cluster or a source station of the target service data according to the query result.

13. The system according to claim 12, wherein, the system is configured to implement the method for acquiring the service data according to any one of claims 2 to 11.

14. A server comprising:
at least one processor; and
a memory communicatively connected with the at least one processor; wherein
the memory is stored with instructions executable by the at least one processor; the instructions are executed by the at least one processor, to cause the at least one processor to execute process of the target edge node, the IPFS management apparatus or the IPFS node in the method for acquiring the service data according to any one of claims 1 to 11.

15. A computer readable storage medium, stored with a computer program, wherein, the computer program, when executed by a processor, implements process of the target edge node, the IPFS management apparatus or the IPFS node in the method for acquiring the service data according to any one of claims 1 to 11.
